# EUROPEAN PATENT APPLICATION

(11) **EP 0 996 072 A1**
(43) Date of publication of application: **26.04.2000**
(21) Application number: 99306964.0
(22) Date of filing: 02.09.1999
(51) Int. Cl.: G06F 17/30

(54) **A method for sharing data among a plurality of applications in a hand-held device**

(30) Priority: 21.10.1998 CN 98121397
(71) Applicant: INTERNATIONAL BUSINESS MACHINES CORPORATION, Armonk, NY 10504 (US)
(72) Inventor: Liu, Leo, c/o IBM United Kingdom Limited, Winchester, Hampshire S021 2JN (GB); Cai, Hong, c/o IBM United Kingdon Ltd., Winchester, Hampshire S021 2JN (GB); Song, Song, c/o United Kingdom Ltd., Winchester, Hampshire S021 2JN (GB)
(74) Representative: Ling, Christopher John

(57) **Abstract**

A method for sharing data among corresponding databases of a plurality of applications in a hand-held device, characterized by comprising the steps of: a) determining a current text selected by a user using an initial application as a keyword, the keyword being a portion of data contained in a current record in a database of the initial application; b) retrieving all records in corresponding databases of all other applications that match the keyword on a certain condition, and specifying these records as matching records; c) determining record identification information for each matching record, that can uniquely identify the matching record in the hand-held device; and d) replacing the current text in the current record in the database of the initial application with a hypertext containing the keyword and all of the record identification information.

## Description

The invention relates to a method for sharing data in a hand-held device, and particularly to a method for sharing data by building user-customized hyperlinks among a plurality of applications in a hand-held device.

In the hand-held device market, the WorkPad™/PalmPilot™ products with the Palm OS operating system have become the main products. WorkPad™ is a product of IBM Corporation and PalmPilot™ is a product of 3COM Company. As they have rather strong built-in communication power, being capable of communicating with computers and accessing Internet, they are proving promising in the client/server architecture as a type of portable client device. In those hand-held devices, some useful applications, such as DateBook, AddressBook, ToDoList, MemoBook, Mail and Expense, are preloaded. Furthermore, there are many available applications developed by third parties, most of which are shareware. In practice, it may be found that the data contained in some applications may be related to each other, but existing devices can not provide appropriate means for organizing and managing this data. That is, when being used, those applications are independent from each other. In addition, there is not yet a method for sharing common data, thereby unavoidably increasing the amount of storage of common data. As a simple example, in DateBook it is necessary to meet various people at various times and in different places. In such situations, it is highly desirable that DateBook can provide the relevant data about the people to meet, such as their phone numbers, office addresses, and so on. The current approach is that the users manually copy the data such as the above-mentioned phone numbers, office addresses and so on from the AddressBook and MemoBook, and then store this data into DateBook. This approach is not only tedious to the users, but also stores redundant data unconsciously, thus wasting the limited, valuable storage space in the hand-held devices.

The object of the invention is to provide a method for quickly sharing data among a plurality of applications in a hand-held device.

To accomplish the above-mentioned object, the present invention provides a method for sharing data among the corresponding databases of a plurality of applications in a hand-held device, comprising the steps of:
a) determining the keyword which is selected when the user is using the initial application, the keyword being a portion of the data of the current record in the database of the initial application;
b) retrieving all the records in corresponding databases of all other applications that match the keyword on a certain condition (such as precise matching or fuzzy matching), and specifying them as matching records;
c) determining record identification information for each matching record that can uniquely identify the matching record in the hand-held device; and
d) replacing the keyword in the current record in the database of the initial application with a hypertext containing the keyword and all of the record identification information.

By using the method of the present invention for sharing data, it is quite easy to build a user-customized hyperlink to the databases of any applications based on the user requirements, thereby effectively organizing and sharing data in the databases of a plurality of applications. Sharing common data saves the valuable storage space of the hand-held devices and increases the availability of the storage space. The method of the invention provides the ability of quickly and conveniently acquiring the relevant data in other databases.

The invention will now be described, by way of example only with reference to the accompanying drawings, in which:
Figure 1 is the main flow diagram of the method for sharing data among the corresponding databases of a plurality of applications of a hand-held device according to this invention, showing the steps of building user-customized hyperlinks;
Figure 2 is a more detailed flow diagram of the method shown in Fig. 1;
Figure 3 is a methodology flow diagram of traversing user-customized hyperlinks built according to the method shown in Fig. 2;
Figure 4 shows the appearance of a kind of hand-held device - WorkPad™/PalmPilot™ type palm computer;
Figure 5 is the screen display of the selected keywords in the DateBook application when IBM WorkPad™ is used;
Figure 6 is the screen display for selective building user-customized hyperlinks in the situation of fig. 5;
Figure 7 is the screen display showing matching records;
Figure 8 is the screen display after the user-customized hyperlink has been built; and
Figure 9 is the screen display after the user has tapped on the hyperlink shown in Fig. 8.

The preferred embodiments of the invention will be described in detail with reference to the accompanying drawings below.

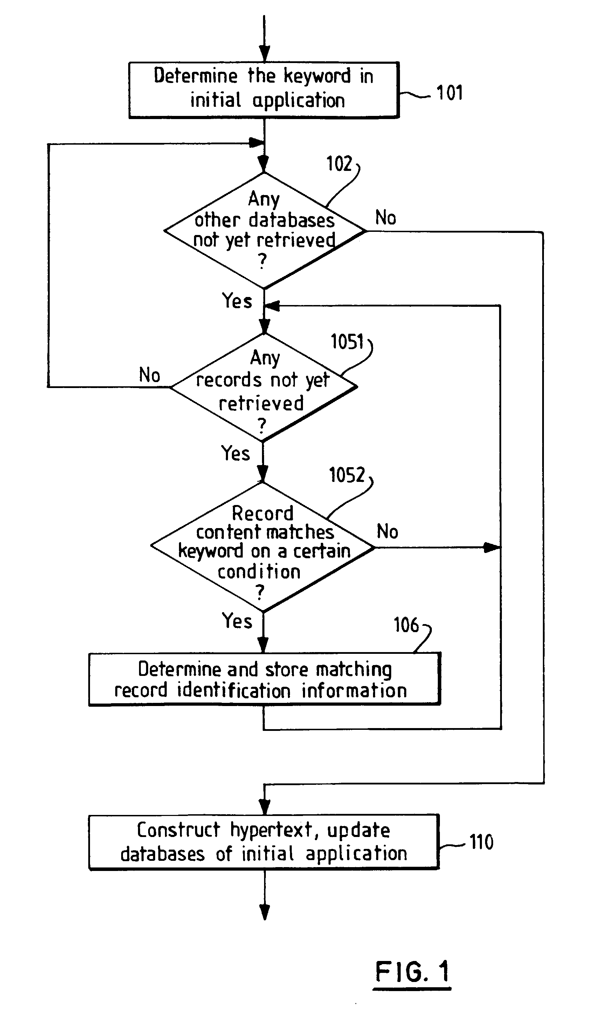

Fig. 1 is the general flow diagram for sharing data among the corresponding databases of a plurality of applications in hand-held devices according to this invention. When a user uses an application (referred to as initial application thereafter) in a hand-held device, he/she can select a portion of a text in the displayed current record as a keyword, while the method shown in Fig. 1 is invoked to automatically build one or more user-customized hyperlinks, which connect the keyword to the relevant data contained in the databases of other applications in the hand-held device. Here, the keyword can be defined in various ways, which does not pose any restrictions on the invention. Keyword can be any separable data block, such as a text string.

In Fig. 1 step 101 determines the keyword selected when the user uses an initial application, the keyword being a portion of the data of the current record in the database of the initial application. Step 102 judges whether there are any databases of other applications that have not yet been retrieved. The purpose of step 102 is to search the databases of all the applications in the hand-held device in order to build as many user-customized hyperlinks as possible.

If the result of the judgment of step 102 is "Yes", the process will proceed to step 1051, otherwise it proceeds to step 110. At step 1051, it is judged whether in the retrieved databases there are any records that have not yet been retrieved. The purpose of step 1051 is to search all the records in a database.

If the result of judgment of step 1051 is "Yes", the process proceeds to step 1052, otherwise it returns to step 102. At step 1052, it is judged whether the content of the retrieved records matches the keyword on a certain condition. Here the certain condition can mean that the retrieved record precisely matches the keyword, or it can mean that said record contains the data related with the keyword. The user can define the conditions, while different conditions do not pose any restrictions on this invention at all.

In summary, the purposes of steps 102, 1051 and 1052 are to retrieve all the records in the corresponding databases of other applications that match the keyword on a certain condition and to specify them as matching records.

If the result of judgment of step 1052 is "No", the process returns to step 1051, otherwise it proceeds to step 106. Step 106 determines for each matching record the record identification information, which can uniquely identify the matching record. For example, in Palm OS, such record identification information can be the resource ID of the record. In addition, such record identification information can be database identification information added with record ID. The categories of the record identification information do not pose any restrictions on the invention, so long as they can uniquely identify the record in the hand-held devices.

Step 110 uses the keyword and all the record identification information to build the hypertexts, and replaces the keyword in the current record in the databases of the initial application with the hypertext. There may be various ways for building the hypertexts, so far as they are compatible with the operating system of the hand-held devices and with the future applications. The ways for building hypertexts do not pose any restrictions on the invention.

It should be pointed out that, prior to step 110, there may be a step of confirming by the user, which displays the candidate of all the matching records wherefrom the user can select required records useful for building hyperlinks. This step is not essential to the invention.

After the user-customized hyperlinks have been built, the keywords can be displayed in special ways (such as adding a horizontal line on the text). When the user uses the application the next time, he/she will notice the text displayed in a special way and knows that those are hypertexts with hyperlink data. The user can quickly obtain the contents of other linked databases by, for example, clicking on the hypertext link. Accordingly, the following steps are executed in the hand-held devices:

Determining the position designated by the user on the display screen of the hand-held device;

If the displayed text at the designated position corresponds to hypertext contained in the current record of the databases of the initial application, the record identification information is obtained from the hypertext, the corresponding records are obtained from the corresponding databases based on the record identification information, and the data contained in the corresponding records are displayed according to the format defined in the database template.

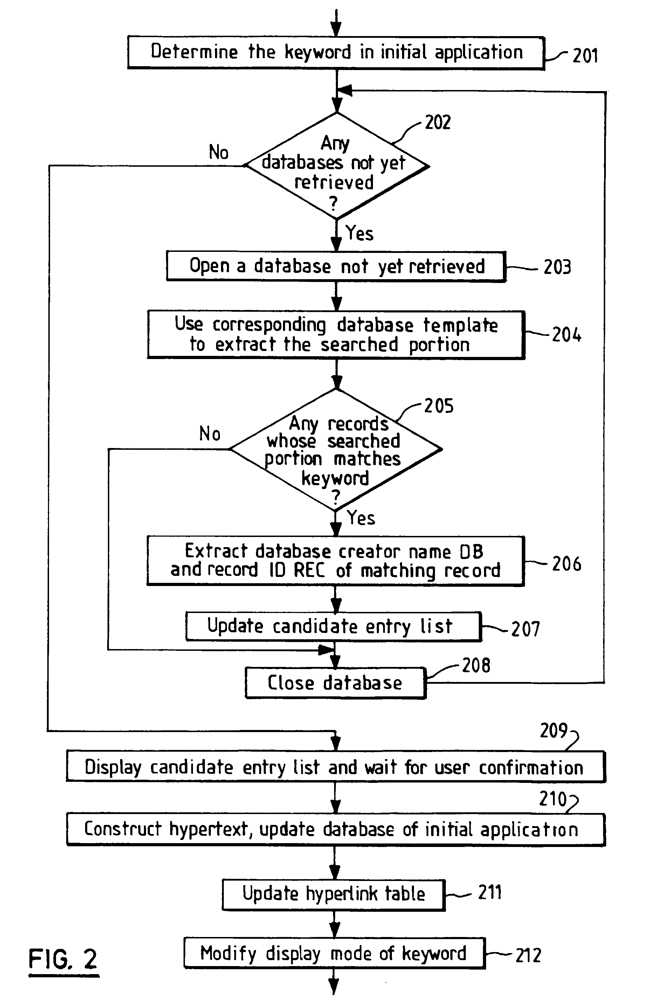

Fig. 2 is the more detailed flow diagram of the method shown in Fig. 1. Step 201 determines the keyword selected when the user uses the initial application, the keyword being a portion of the data of the current record in the databases of the initial application. Step 202 judges whether there are any databases of other applications that have not yet been retrieved. If the result of judgment of step 202 is "Yes", the process proceeds to step 203, otherwise it proceeds to step 209. Step 203 locates and opens a database that has not yet been retrieved. Step 204 decides the mode of matching from the database's corresponding template, and extracts the searching part based on the parameters of matching mode. Step 205 judges whether there exist any records whose searched portion matches the keyword, in other words, whether there exist any records whose searched portion matches the keyword on a certain condition. If the result of judgment of step 205 is "Yes", the process proceeds to step 206, otherwise it proceeds to step 208. Step 206 makes use of the above-mentioned database template to extract the database creator name DB and the record ID REC of all the records in the databases which match the keyword. Step 207 uses the DB and all the REC extracted at step 206 to update the candidate entry list. The candidate entry list is used at step 209 to display to the user the corresponding records in the corresponding databases so that the user can select the records to which the hyperlinks have to be built. Of course, if user confirmation is not required, steps 207 and 209 can be omitted.

It should be pointed out that steps 204, 205, 206 and 207 could be executed record-by-record for each record in the databases. Namely, the purposes of their execution are by utilizing the corresponding database template to extract the match-enabling mode of each record and to extract the corresponding searched portions based on the extracted value of the match-enabling mode. As only the searched portions are compared with the keyword, the amount of data used for comparison is decreased. If it is determined that a record matches the keyword, the database template is used to extract the database creator name DB and the record ID REC. The database creator name DB and the record ID REC are used as the record identification information of the matching record.

Step 208 closes the already retrieved databases.

Step 209 displays the data or a portion of the data of the corresponding records according to the database creator name DB and the record ID REC contained in the candidate entry list and waits for the user to confirm the records to which hyperlinks should be built. Step 209 is not necessary, it is only used to provide a selection chance for the users. However, it is possible to automatically build the hyperlinks to the candidate record entry on certain conditions. In addition, the step of waiting for the confirmation made by the user can also be executed between steps 205 and 206. If there is no confirmation made by the user, the process proceeds directly to step 208.

Step 210 constructs the hypertexts by using the database creator name DB and record ID REC, which correspond to the user confirmed records, and the keywords, and then replaces the keywords in the current record of the databases of the initial applications with the hypertexts.

There may be many ways for constructing the hypertexts. For example, in order to be compatible with the existing Palm OS and the future applications, the conception of "TAG", which is often used in the hypertexts on the PC, can be employed. Here a pair of tags 〈A〉, 〈/A〉 and two parameters DB and REC are used. For example, hypertext 〈A DB="addr" REC=0x01234567〉 Leo LIU 〈/A〉 represents a record, which has a record number REC equal to hexadecimal 0x01234567 in the databases of the application with creator name (DB) equal to "addr" ( i.e. AddressBook ) and which is pointed to by an ordinary text "Leo LIU". This type of linking mode is called user-customized hyperlink.

Step 211 updates the hyperlink table. Hyperlink table is used for storing the data related with all the hyperlinks in the current page ( or screen) so as to be used when the hyperlinks are traversed, deleted or modified. However, the hyperlink table is not necessary for the data sharing method of this invention. Building of the table is only for the convenience of traversing, deleting or modifying the hyperlinks.

The hyperlink table can have, for example, the following structure:

| Hyperlink indices | Rectangular area | Creator name DB | Record number REC |
|---|---|---|---|
| 1 | (10,10,40,11) | "memo" | 0x00100030 |
| 2 | (30,40,30,11) | "addr" | 0x01234567 |
| ... | | | |

where Rectangular area indicates the position on the screen occupied by the text containing the hyperlinks and marks (such as a horizontal line on the text).

Step 212 changes the display mode of the keyword selected by the user to let the user know that the text displayed in this mode is a hypertext with hyperlink data. The display modes of the hypertexts can be different, so long as they are different from those of the ordinary texts. For example, a horizontal line can be added on the text. Different display modes do not pose any restrictions on the invention.

The concept of the database template used in the method of Fig. 2 will be explained now.

Each record in the databases of each application is, in fact, a binary byte string. A database template having the following format is defined for the databases of each application: 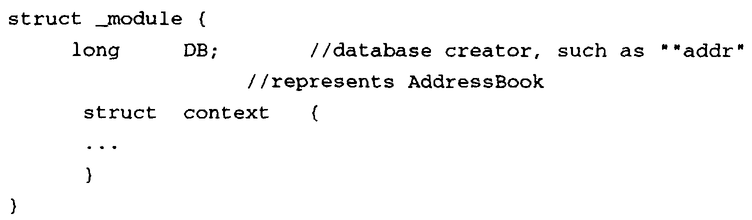 where context is the concrete content of the database template, for example, the concrete content of database template "addr" can be:

| Segment name | Data type | Length | Matching mode |
|---|---|---|---|
| Surname | String | 4 | 1 |
| Name | String | 4 | 1 |
| Phone number (O) | String | 10 | 0 |
| Phone number (H) | String | 10 | 0 |
| Post code | String | 6 | 0 |
| Remarks | String | 50 | 1 |

where the matching mode represents the way of matching taken by the corresponding part (such as a segment) when the databases are retrieved by using the keyword. For example, taking the value of the matching mode as 1 represents a precise matching of the corresponding segments; taking its value as 0 represents no matching. As in the above example, the matching mode of the segment "surname" takes the value as 1, and this means that when the database "addr" is retrieved by using a certain keyword, the content of the segment "surname" will be compared with the keyword precisely. Of course, other matching mode can also be introduced, such as, taking value as 2 indicates partial matching, taking value as 3 indicates synonym matching, etc.

Therefore, context structure can be defined as follows:

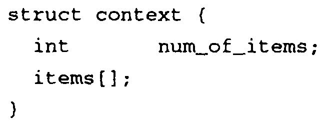

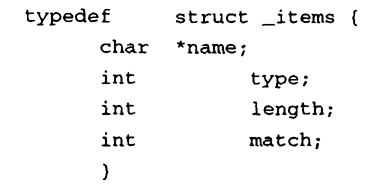

Remarks: num_of_items is the number of items in the template, followed by several items, each of which contains name(name), data type(type), data length(length) and matching type(match). In such a way the format of the record can be obtained completely. In the above, "0" value of the data type represents character string(string), "1" represents integer type(int), "2" represents long integer type(long), and so on.

Hence, context for the above example will be:

| | | |
|---|---|---|
| 6, | | (There are 6 items in the template) |
| "Surname", | 0,4,1 | (The first item is "Surname", character string type, length is 4, match-enabled) |
| "Name", | 0,4,1 | (The second item is "Name", character string type, length is 4, match-enabled) |
| "Phone number (O)", | 0,10,0 | (The third item is "Phone number (O)", character string type, length is 10, match-disabled) |
| "Phone number (H)", | 0,10,0 | (The fourth item is "Phone number (H)", character string type, length is 10, match-disabled) |
| "Post code", | 0,6,0 | (The fifth item is "Post code", character string type, length is 6, match-disabled) |
| "Remarks", | 0,50,1 | (The sixth item is "Remarks", character string type, length is 50, match-enabled) |

This kind of template can explain a meaningless string of bytes as a meaningful field, and judges whether this field is match-enabled or not. Moreover, it can be judged from this matching mode whether links will be defined for sound or image. For example, 1000 is used to represent sound linking, and 2000 represents image linking.

The above data structures are only for illustration purpose and not restrictive at all.

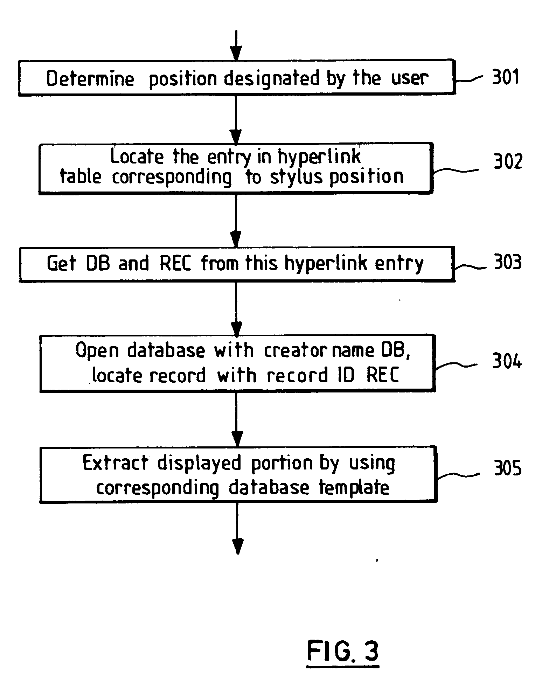

Figure 3 is the methodology flow diagram of traversing user-customized hyperlinks built according to the method shown in Fig. 2. Usually, when an application is being used, if this program has found that a certain text string is a hypertext (containing tags), it will display the text in special way (such as adding a horizontal line on an ordinary text). Therefore, the users can know that this kind of text displayed in special way contains hyperlink data, and can tap on this text string (that is, a designated position on the screen) to browse the corresponding records in the databases linked to by the hyperlinks. At this time, the method shown in Fig. 3 will be automatically invoked.

In Fig. 3, step 301 determines the user-designated position on the display screen of the hand-held device. Step 302 searches for hyperlink table of the current page, and locates the hyperlink table entry corresponding to the position of the user stylus. Step 303 gets the creator name DB and record ID REC from the hyperlink table entry. Step 304 opens the databases whose creator name is DB, and locates the record with a record ID REC. Step 305 extracts the displayed portions (such as several segments) by using the database template corresponding to DB and displays them.

Moreover, a method for deleting the user-customized hyperlinks in the current page can also be provided. In this method, firstly each entry of the hyperlink table corresponding to the current page is displayed. Then the user selects one or more entries to be deleted. DB and REC are obtained from the entries, the corresponding databases and the corresponding records are found, and the original data are restored. For example, in the above example, in the 0x01234567-th record of the AddressBook("addr"), "〈A DB="addr" REC=0x01234567〉Leo LIU 〈/A〉" is replaced with "Leo LIU". Finally the corresponding entries in the hyperlink table are deleted.

In addition, a function for modifying the user-customized hyperlinks can also be set. By using the above-mentioned operations, the skilled in the art can readily implement the function for modifying the user-customized hyperlinks, which will no more be discussed here.

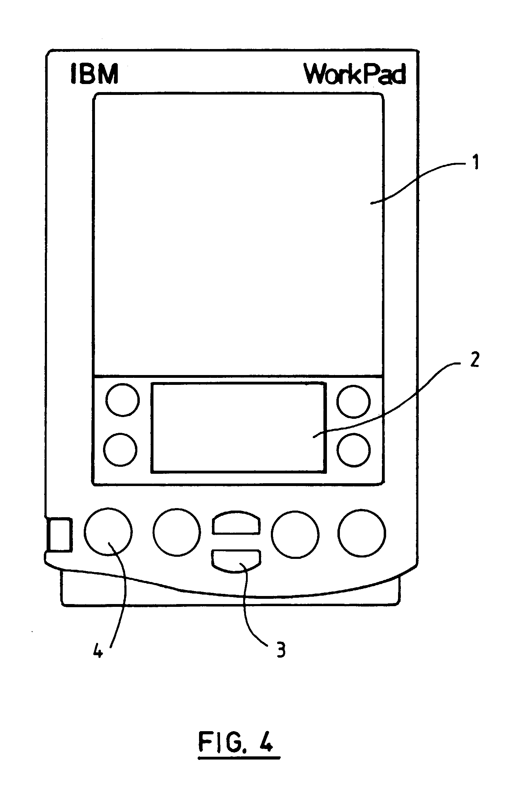

The detailed process for building the user-customized hyperlinks according to the invention will be explained below with reference to Fig. 4, 5, 6, 7, and 8 with an example of the DateBook in IBM WorkPad™ used by a user.

The appearance of WorkPad™ is shown in Fig. 4. Symbol 1 indicates display screen, 2 indicates graffiti area, 3 indicates scrolling button, 4 indicates application button. Display screen 1 is used to display the information stored in WorkPad™ computer, and is of the touch-sensing type being able to sense the point touching done by the user on the screen. Display screen 1 can also display the control and setting information when the user uses the applications. The graffiti area 2 is the area for the user to input the text with a stylus. The scrolling button 3 is used for the reading of the text or other information outside display screen 1, including scrolling down button and scrolling up button. The application button 4 is used to activate the WorkPad™ applications, and each button has a specified icon corresponding to its application. On the front panel of WorkPad™ there are four application buttons, which correspond to DateBook, AddressBook, ToDoList and MemoBook respectively. It is possible to reassign the application buttons to activate any applications stored in WorkPad™. A dedicated stylus (not shown), which can be used to touch-point display screen 1 or to write on graffiti area 2, is provided along with WorkPad™.

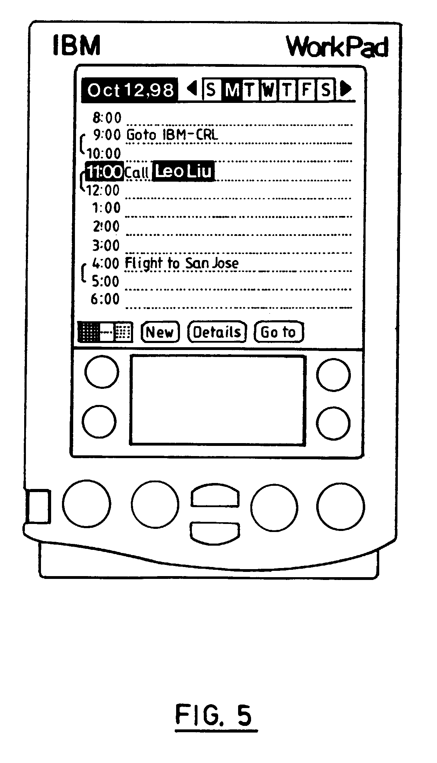

Provided that the user wants to call Mr. Leo LIU by phone after 11:00 on Monday, 12 October, 1998, he/she can use DateBook application to input "Call Leo LIU" after 11:00 on the page of 12 October, 1998. If the user wants to know Leo LIU's address, phone number, or other relevant information about Leo LIU, he/she first selects "Leo LIU" as a keyword, as shown in Fig. 5.

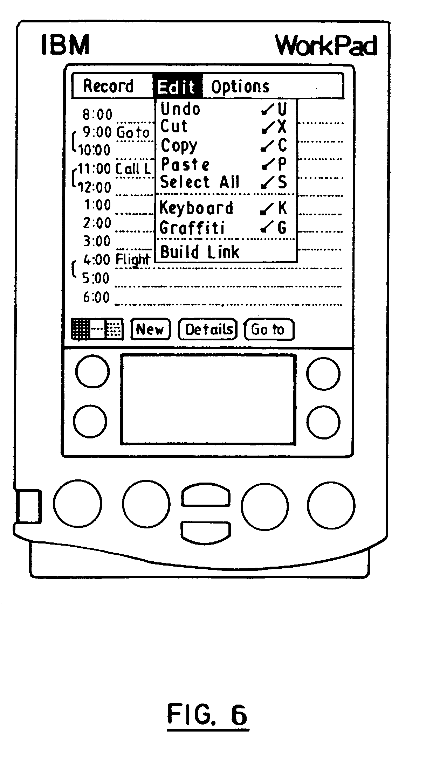

Next, BuildLink (to build the hyperlink) option entry is selected from menu "Edit", as shown in Fig. 6.

Then, the method for building the user-customized hyperlinks as shown in Fig. 2 is activated. The method of Fig. 2 retrieves the databases of all the applications in this WorkPad™ with "Leo LIU" as the keyword.

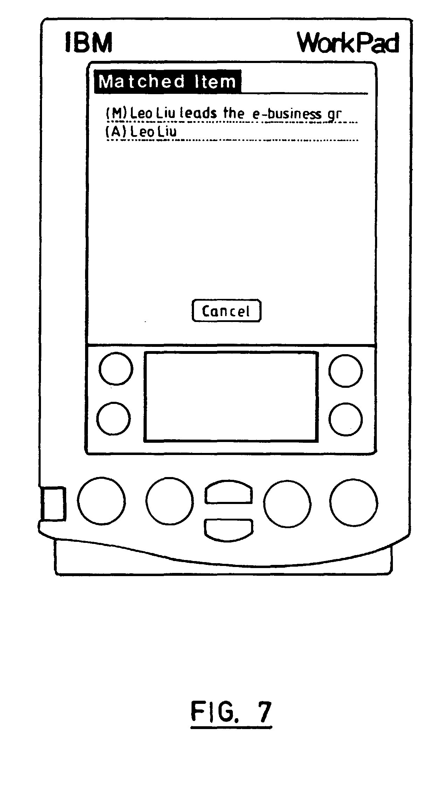

Suppose that the method of Fig. 2 has found three matching records in AddressBook, there are three option entries in the candidate entry list, which are displayed to the user and ready to be confirmed by the user, as shown in Fig. 7. Each entry has a flag in front of it, showing the database from which it comes. For example, (M) indicates that this record comes from MemoBook "memo", (A) indicates that this record comes from AddressBook "addr".

Suppose that the first candidate entry "Leo LIU" is selected.

Step 210 in Fig. 2 constructs the hypertext as follows:
〈A DB="addr" REC=0x01234567〉 Leo LIU〈/A〉

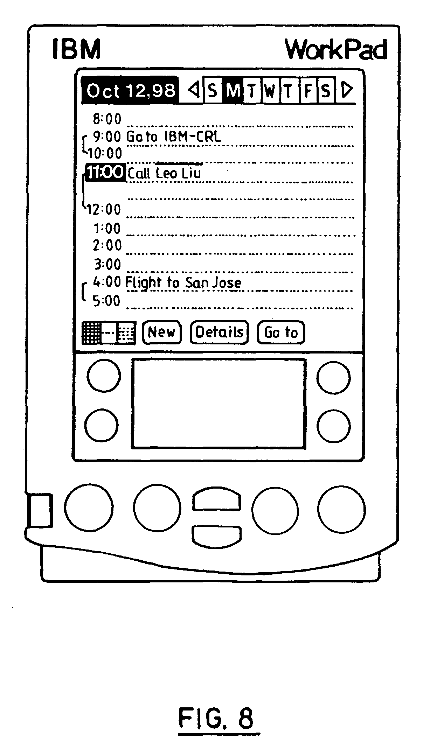

Then "Leo LIU" in the original record in DateBook is replaced with the above-mentioned hypertext. Step 211 in Fig. 2 updates the hyperlink table of the current page of DateBook. Step 212 modifies the display mode of "Leo LIU", indicating that currently displayed "Leo LIU" is a hypertext with hyperlink data, as shown in Fig. 8.

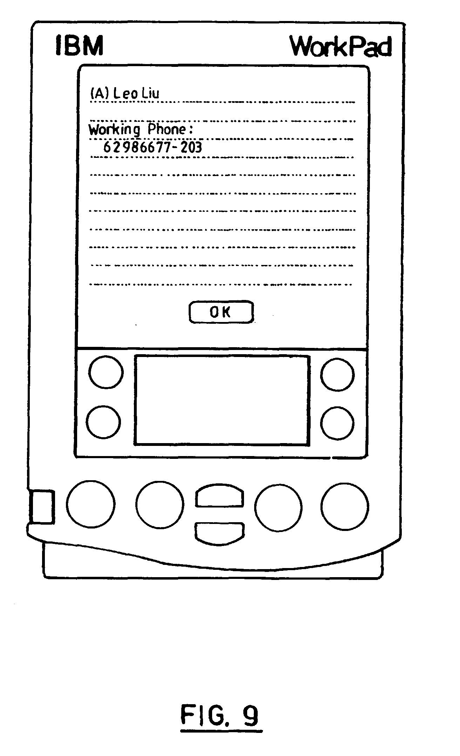

In the following the usage of the user-customized hyperlinks is explained with reference to Fig. 8 and 9.

The usage of the user-customized hyperlinks is similar to that used in the browser of World Wide Web. For example, when using DateBook, the user notices a horizontal line displayed on "Leo LIU" (as shown in Fig. 8) and knows that it contains hyperlink data, then he/she tap on any point in the display area occupied by "Leo LIU" with a stylus. Accordingly, the method for traversing user-customized hyperlinks (as shown in Fig. 3) is activated. This method displays the corresponding records by querying the hyperlink table of the current page to obtain the database creator name DB and record number REC (as shown in Fig. 9).

The user can build and use the links between the relevant information of a plurality of databases entirely on his/her own need, rather than only being able to browse the current hyperlinks as on PC, that is why in this invention the built hyperlinks are called "user-customized hyperlinks". The "user-customized hyperlinks" stated in this invention are different from the existing hyperlinks in essentials.

## Claims

1. A method for sharing data among corresponding databases of a plurality of applications in a hand-held device, characterized by comprising the steps of:
determining (101,201) a current text selected by a user in an initial application as a keyword, said keyword being a portion of data contained in a current record in a database of said initial application;
retrieving (105,205) all records in corresponding databases of all other applications that match said keyword on a certain condition, and specifying said records as matching records;
determining (106,206) record identification information for each said matching records, said record identification information uniquely identifying said matching record in said hand-held device; and
replacing (110,210) said current text in said current record in the database of said initial application with a hypertext containing said keyword and all of said record identification information.

2. A method as claimed in claim 1, characterized in that said step (b) comprises steps of:
for each record in each database of all other applications, extracting (204) a search portion from said record by using a corresponding database template, and specifying (205) said record as a matching record if said search portion satisfies a certain condition in comparison with said keyword.

3. A method as claimed in claim 1, characterized in that said step (c) comprises the steps of:
for each said matching records, determining (206) database identification information for the database where said matching record is stored and a record number for said matching record, and forming (206) said record identification information with said database identification information and said record number.

4. A method as claimed in claim 3, characterized in that said database identification information is a creator name of said database, which is extracted by using a corresponding database template.

5. A method as claimed in claim 1, characterized in that said step b) further comprises the steps of:
displaying (209) at least one candidate item of data contained in said matching records (candidates), and waiting for confirmation made by the user,
if it is determined that the user does not confirm, no longer specifying said matching records as matching records.

6. A method as claimed in claim 1, characterized by further comprising the steps of:
when said initial application is used by the user,
determining (301) a position designated by the user on a display of said hand-held device;
if a text displayed at the designated position corresponds to a hypertext contained in a current record in a database of said initial application, extracting (303) a record identification information from said hypertext, obtaining (304) a corresponding record from a corresponding database based on said record identification information, extracting (305) data by using a corresponding database template and displaying them.

7. A method as claimed in claim 1, characterized by further comprising the steps of:
forming a new hyperlink entry by using said record identification information and position identification information of a position on a display of said hand-held device where said keyword is selected, and adding said new hyperlink entry into a hyperlink table.

8. A method as claimed in claim 7, characterized by further comprising the steps of:
when said initial application is used by the user, determining (301) a position designated by the user on a display of said hand-held device;
searching (302) said hyperlink table, if a hyperlink entry is found that contains a position identification information corresponding to the designated position, extracting (303) a record identification information from said hypertext, obtaining (304) a corresponding record from a corresponding database based on said record identification information, extracting (305) data by using a corresponding database template and displaying them.
